# EUROPEAN PATENT APPLICATION

(11) **EP 1 855 025 A1**
(43) Date of publication of application: **14.11.2007**
(21) Application number: 05765794.2
(22) Date of filing: 12.07.2005
(51) Int. Cl.: F16F 13/30

(54) **VIBRATION-ISOLATING MOUNT DEVICE**

(30) Priority: 04.03.2005 JP 2005061544
(71) Applicant: Shin Caterpillar Mitsubishi Ltd., Tokyo 158-8530 (JP)
(72) Inventor: YOSHINO, Kazunori C/O SHIN CATERPILLAR MITSUBISHI, Tokyo 1588530 (JP)
(74) Representative: Ablett, Graham Keith
(86) International application number: PCT/JP2005/012797
(87) International publication number: WO 2006/095459

(57) **Abstract**

The present invention provides a vibration control mount apparatus capable of absorbing an initial pushing-up load based on a shock and capable of promptly damping a residual vibration generated after the shock.

The vibration control mount apparatus 10 includes a case body 11 mounted on a turning frame 3, a mount rubber 14 is mounted on the case body 11. A magnetic viscous fluid 16 of which viscosity is changed by a magnetic filed is sealed in a sealing chamber 15 in the case body 11. A movable body 21 supported by the mount rubber 14 has a damper plate 23 which moves while receiving resistance from the magnetic viscous fluid 16 in the sealing chamber 15. Viscosity variable controlling means 32 forms the magnetic field in accordance with vibration acceleration detected by the acceleration detecting means 31 to change the viscosity of the magnetic viscous fluid 16.

## Description

### Technical Field

The present invention relates to a vibration control mount apparatus capable of absorbing an initial pushing-up load based on a shock and capable of promptly damping a residual vibration generated after the shock.

### Background Art

Conventionally, for example, a vibration control mount apparatus such as a viscous mount has been known, the viscous mount including: a case body mounted on a mount base member such as a frame of a truck; an elastic body mounted on the case body; a sealing chamber formed in the case body; damping liquid such as silicon oil sealed in the sealing chamber; a movable body that has a damper plate which moves while receiving resistance from the damping liquid in the case body, that is supported by the elastic body and on which a cab floor member is mounted; and a gap (orifice) formed between an outer circumference of the damper plate and an inner circumference of the case body. (e.g. see Patent reference 1)
Patent reference 1: Japanese Laid-open Patent Publication No. 7-133841

### Disclosure of the Invention

### Problems to be Solved by the Invention

However, in the above-described conventional vibration control mount apparatus, for example, when a gap (orifice) between the damper plate and the case body is made smaller so that a residual vibration, which is generated after a shock such as a pushing-up load is applied, is promptly damped, an initial pushing-up load cannot be absorbed when the shock is applied. As a result, large force is applied to a cab floor member side, and there is a possibility of causing reduction in durability of the cab, etc. On the other hand, when the gap (orifice) is made larger, there is a problem such that the residual vibration remains for a long period of time.

In view of such problems, the present invention has been carried out, and it is an object of the present invention to provide a vibration control mount apparatus capable of absorbing the initial pushing-up load based on a shock and capable of promptly damping the residual vibration generated after the shock.

### Means for Solving Problems

A vibration control mount apparatus according to claim 1 includes: a case body mounted on a mount base member; an elastic body mounted on the case body; a sealing chamber formed in the case body; a viscosity change fluid which is sealed in the sealing chamber and of which viscosity is changed; a movable body having a damper portion, which moves while receiving resistance from the viscosity change fluid in the sealing chamber, and which is supported by the elastic body; acceleration detecting means for detecting vibration acceleration of the movable body; and viscosity variable controlling means for changing the viscosity of the viscosity change fluid in accordance with the vibration acceleration detected by the acceleration detecting means.

The vibration control mount apparatus according to claim 1 can absorb an initial pushing-up load based on a shock and promptly damp a residual vibration generated after the shock.

In a vibration control mount apparatus according to claim 2, the viscosity change fluid of the vibration control mount apparatus according to claim 1 corresponds to a magnetic viscous fluid of which viscosity is changed by a magnetic field, and the viscosity variable controlling means according to claim 1 forms the magnetic field in accordance with the vibration acceleration detected by the acceleration detecting means to change the viscosity of the magnetic viscous fluid.

The vibration control mount apparatus according to claim 2 can properly absorb the initial pushing-up load based on a shock and properly and promptly damp the residual vibration generated after the shock with use of the magnetic viscous fluid of which viscosity is changed by the magnetic field.

In a vibration control mount apparatus according to claim 3, the viscosity change fluid of the vibration control mount apparatus according to claim 1 corresponds to an electric viscous fluid of which viscosity is changed by application of voltage, and the viscosity variable controlling means according to claim 1 applies voltage in accordance with vibration acceleration detected by the acceleration detecting means to change the viscosity of the electric viscous fluid.

The vibration control mount apparatus according to claim 3 can properly absorb the initial pushing-up load based on a shock and properly and promptly damp the residual vibration generated after the shock with use of the electric viscous fluid of which viscosity is changed by application of voltage.

In a vibration control mount apparatus according to claim 4, the viscosity variable controlling means of the vibration control mount apparatus according to claim 1 raises the viscosity of the viscosity change fluid during the residual vibration generated after the shock.

The vibration control mount apparatus according to claim 4 can properly and promptly damp the residual vibration by raising the viscosity of the viscosity change fluid during the residual vibration generated after the shock.

In a vibration control mount apparatus according to claim 5, the mount base member of the vibration control mount apparatus according to any one of claims 1 to 4 corresponds to a turning frame of a working machine, and a cab floor member is mounted on the movable body.

Further, in a vibration control mount apparatus according to claim 5, an excellent vibration control effect to the cab floor member is exerted, and durability of the cab and riding comfort of an operator, etc., are improved.

### Effects of the Invention

According to the invention of claim 1, it is possible to absorb an initial pushing-up load based on a shock and possible to promptly damp a residual vibration generated after the shock.

According to the invention of claim 2, it is possible to properly absorb the initial pushing-up load based on a shock and possible to properly and promptly damp the residual vibration generated after the shock with use of a magnetic viscous fluid of which viscosity is changed by a magnetic field.

According to the invention of claim 3, it is possible to properly absorb the initial pushing-up load based on a shock and possible to properly and promptly damp the residual vibration generated after the shock with use of an electric viscous fluid of which viscosity is changed by application of voltage.

According to the invention of claim 4, it is possible to properly and promptly damp the residual vibration by raising the viscosity of a viscosity change fluid during the residual vibration generated after the shock.

According to the invention of claim 5, it is possible to exert an excellent vibration control effect to a cab floor member and possible to plan improvements in durability of the cab and riding comfort of an operator, etc.

### Brief Description of the Drawings

Fig. 1 is a constitutional diagram showing an embodiment of a vibration control mount apparatus of the present invention;
Fig. 2 is a cross sectional view of the vibration control mount apparatus of the present invention;
Fig. 3 is a side view of an oil hydraulic power shovel provided with the vibration control mount apparatus of the present invention;
Fig. 4 is a schematic view of the vibration control mount apparatus of the present invention;
Fig. 5 is a graph indicating force F applied to a cab floor member and a speed dx/dt of a turning frame;
Fig. 6 is a graph indicating a damping factor C of the vibration control mount apparatus of the present invention; and
Fig. 7 is a constitutional diagram showing another embodiment of the vibration control mount apparatus of the present invention.

### Description of Symbols

- 1: Oil hydraulic power shovel as working machine
- 3: Turning frame as mount base member
- 9: Cab floor member
- 10: Vibration control mount apparatus
- 11: Case body
- 14: Mount rubber as elastic body
- 15: Sealing chamber
- 16: Magnetic viscous fluid as viscosity change fluid
- 21: Movable body
- 23: Damper plate as damper portion
- 31: Acceleration detecting means
- 32, 42: Viscosity variable controlling means
- 41: Electric viscous fluid as viscosity change fluid

### Best Mode for Carrying Out the Invention

Embodiments of the present invention will be explained with reference to the accompanying drawings.

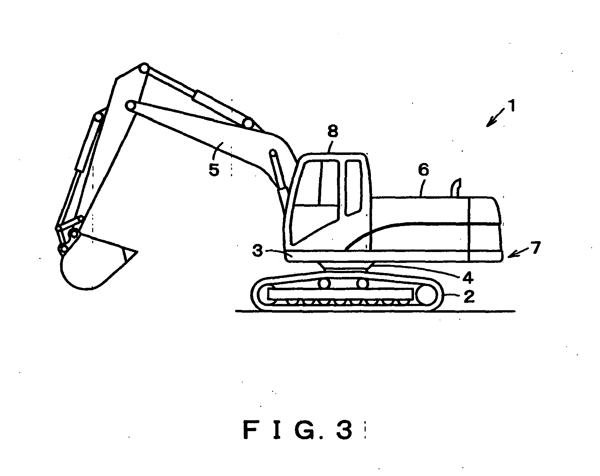

In Fig. 3, reference symbol 1 denotes an oil hydraulic power shovel as a working machine, the oil hydraulic power shovel 1 includes a lower portion traveling body 2 of a crawler type, and a substantially plate-shaped turning frame 3 as a mount base member is provided above the lower portion traveling body 2 via a turning bearing portion 4 to be turnable around an axis of a vertical direction (not shown). Moreover, a body 7 is constituted by the lower portion traveling body 2, the turning bearing portion 4 and the turning frame 3.

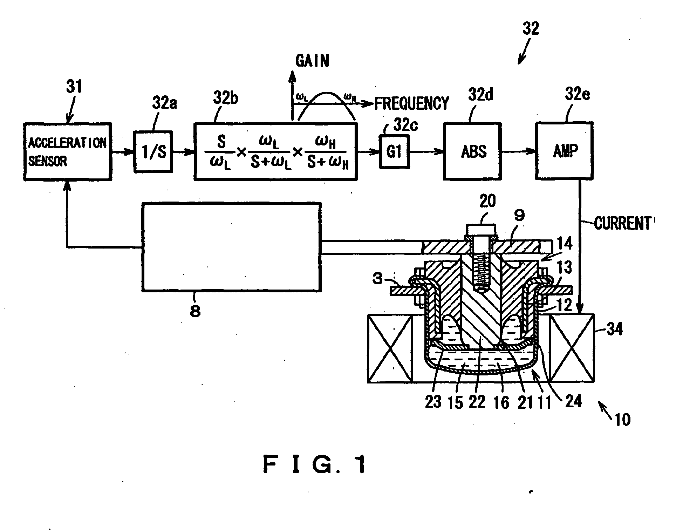

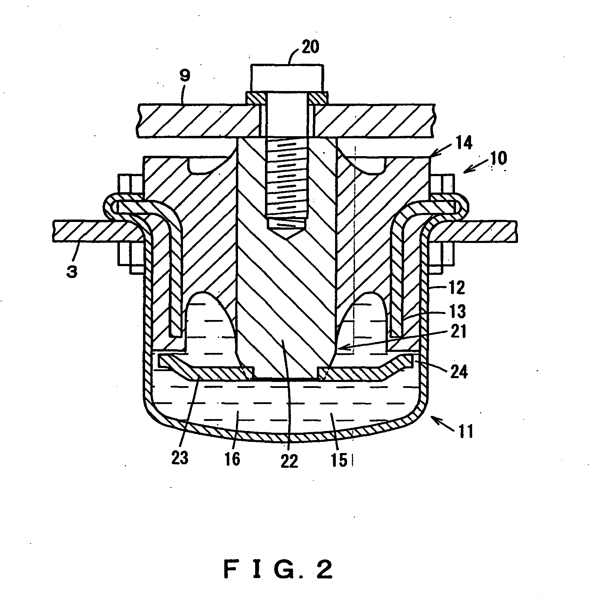

Further, on the turning frame 3 of the body 7, a working apparatus 5 which performs digging work and a power apparatus 6 constituted by an engine and a oil hydraulic pump driven by the engine, etc., are provided. Furthermore, as shown in Fig. 1 and Fig. 2, a substantially plate-shaped cab floor member 9 of a cab 8 is provided above the turning frame 3 via the plurality of, for example, four vibration control mount apparatuses 10 such as viscous mounts.

The vibration control mount apparatus 10 includes a bottomed substantially cylindrical case body 11 mounted on the turning frame 3, for example, the case body 11 is constituted by an outer cylinder member 12 and an intermediate cylinder member 13. A mount rubber 14, which is substantially cylindrical and an upper and lower surface opening-shaped elastic body, is mounted on the case body 11. A sealing chamber 15. is formed in the case body 11, a magnetic viscous fluid 16, of which viscosity is changed by a magnetic field and which is a liquid viscosity change fluid, is sealed in the sealing chamber 15. Moreover, when the magnetic viscous fluid (magnetic fluid) 16 such as silicon oil including, for example, a magnetic particle and a surface active agent is placed in the magnetic field, an apparent viscosity is raised.

Further, the vibration control mount apparatus 10 includes a movable body 21 which is movably supported by the mount rubber 14 based on an elastic deformation of the mount rubber 14 and on which the cab floor member 9 is mounted by a bolt 20. For example, the movable body 21 is constituted by a guide shaft 22 such as a center pin, which is fitted and inserted into an inner circumference side of the mount rubber 14 and in which the bolt 20 is screw-engaged with an upper portion of the center pin, and a damper plate 23 as a substantially disc-shaped damper portion which is mounted on a lower end of the guide shaft 22 and which moves while receiving resistance from the magnetic viscous fluid 16 in the sealing chamber 15. A circle ring-shaped gap (orifice) 24 is formed between an outer circumference surface of the damper plate 23 and an inner circumference surface of the outer cylinder member 12 of the case body 11.

Further, the vibration control mount apparatus 10 includes acceleration detecting means 31 for detecting vibration acceleration of the movable body 21. For example, the acceleration detecting means 31 is an acceleration sensor for detecting vibration acceleration of the cab 8 which vibrates in an integrated manner with the movable body 21 in a vertical direction.

Furthermore, the vibration control mount apparatus 10 includes viscosity variable controlling means 32 for forming the magnetic field in accordance with the vibration acceleration detected by the acceleration detecting means 31 and for changing viscosity of the magnetic viscous fluid 16 in the sealing chamber 15. The viscosity variable controlling means 32 has an integral circuit 32a, a band-pass filter circuit 32b, a gain circuit 32c, an absolute value circuit 32d, an amplifier circuit 32e and an electromagnet 34.

For example, the viscosity variable controlling means 32 forms the magnetic field by turning on of the electromagnet (magnetic field forming means) 34, places the magnetic viscous fluid 16 in the sealing chamber 15 in the magnetic field and raises the viscosity of the magnetic viscous fluid 16, only when vibration acceleration near.a resonance point frequency between the turning frame 3 and the cab floor member 9 is not less than a predetermined value. An impulse-like shock acceleration of an initial shock is generally a high frequency and filtered by the band-pass filter circuit 32b, and therefore a magnetic field is not formed in the initial shock, the viscosity of the magnetic viscous fluid 16 remains low. Moreover, it is possible to employ a constitution in which iron powder, etc., is not concentrated to a periphery of the electromagnet 34 from the exterior or the outside by a proper sealing mechanism.

Further, for example, when a shock such as a pushing-up load from a surface of bedrock is applied to the body 7 of the oil hydraulic power shovel 1 during digging work by use of the oil hydraulic power shovel 1 provided with the vibration control mount apparatus 10, the shock applied to the body 7 is absorbed by the vibration control mount apparatus 10, and vibration to the cab 8 is controlled.

That is, in the initial shock, the electromagnet 34 remains off, a magnetic field is not formed, and the viscosity of the magnetic viscous fluid 16 remains low. Therefore, an orifice resistance during the fluid movement in the gap (orifice) 24 becomes smaller, an initial pushing-up load with a large amplitude is absorbed, as a result, a large force is not applied to the cab floor member 9, and there is no possibility of causing a reduction in durability of the cab 8.

Further, after a shock is applied to the body 7 of the oil hydraulic power shovel 1, when the vibration acceleration near the resonance point frequency between the turning frame 3 of the body 7 and the cab floor member 9 of the cab 8 is not less than the predetermined value, current is supplied to the electromagnet 34, the magnetic field is formed, and the viscosity of the magnetic viscous fluid 16 in the sealing chamber 15 is raised. Therefore, the orifice resistance during the fluid movement in the gap (orifice) 24 becomes larger, a residual vibration with a small amplitude is promptly damped, as a result, there is no possibility of causing a reduction in riding comfort of an operator.

The above-described vibration control mount apparatus 10 thus maintains the viscosity of the magnetic viscous fluid 16 low without changing it during the initial pushing-up load based on a shock to absorb the load, and thus includes the viscosity variable controlling means 32, which raises the viscosity of the magnetic viscous fluid 16 during the residual vibration after the shock, to promptly damp the residual vibration based on inertia generated after the shock, without a large change to the conventional viscous mount shape. Accordingly, it is possible to plan improvements in the durability of the cab 8 and the riding comfort of the operator, etc.

Further, the vibration control mount apparatus 10 can change the orifice resistance in the gap (orifice) 24 by the magnetic viscous fluid 16 to enlarge the gap (orifice) 24 between the damper plate 23 and the case body 11. Therefore, the vibration control mount apparatus 10 can control abrasion caused by interference between the damper plate 23 and the case body 11, maintain a stable damping factor characteristic, and make a secular change of performance smaller.

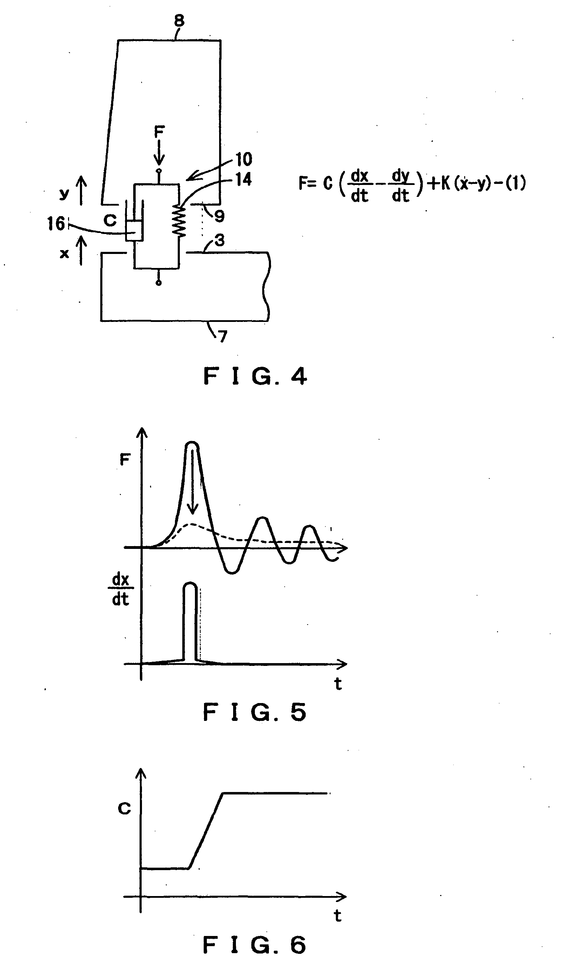

Here, Fig. 4 is a schematic view of the vibration control mount apparatus 10, Fig. 5 is a graph indicating force F applied to a cab floor member 9 and a speed dx/dt of a turning frame (mount base member) 3, and Fig. 6 is a graph indicating a damping factor C of the vibration control mount apparatus 10.

The force F applied to the cab floor member 9 is represented by the expression (1) in Fig. 4. In this expression (1), displacement of the turning frame 3 is defined as x, displacement of the cab floor member 9 is defined as y, time is defined as t, a spring coefficient of the mount rubber 14 is defined as k and the damping factor is defined as C. Further, when C is changed as shown in Fig. 6, F becomes stable as undulation of the dotted line is extremely small in Fig. 5, and therefore the durability of the cab 8 and the riding comfort of the operator, etc., can be improved.

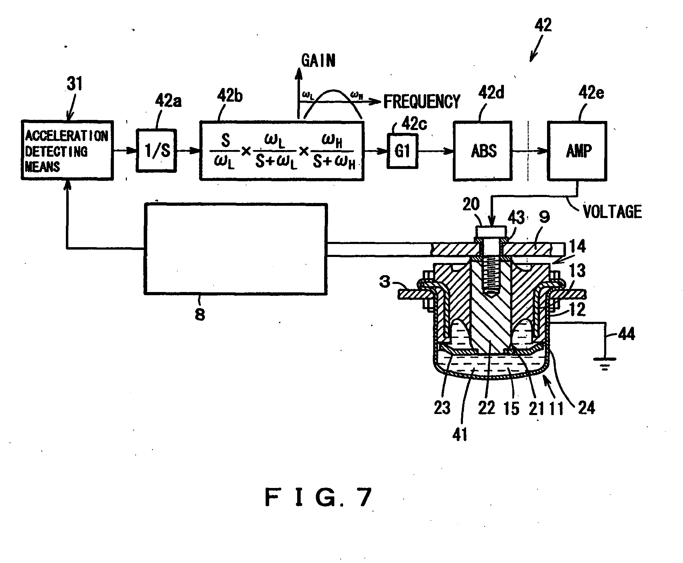

Fig. 7 is a constitutional diagram showing another embodiment of the vibration control mount apparatus 10.

In a vibration control mount apparatus 10 shown in Fig. 7, differing from the vibration control mount apparatus as shown in Fig. 1, an electric viscous fluid 41 as a liquid viscosity change fluid of which viscosity is changed by application of voltage is sealed in the sealing chamber 15. Moreover, when voltage is applied to the electric viscous fluid (ER fluid) 41, inner particles aggregate to form a chain structure along an electric field direction, and therefore an apparent viscosity is raised.

Further, the vibration control mount apparatus 10 includes viscosity variable controlling means 42 for changing the viscosity of the electric viscous fluid 41 in the sealing chamber 15 by application of voltage in accordance with the vibration acceleration detected by the acceleration detecting means 31. The viscosity variable controlling means 42 has an integral circuit 42a, a band-pass filter circuit 42b, a gain circuit 42c, an absolute value circuit 42d and an amplifier circuit 42e.

For example, the viscosity variable controlling means 42 applies voltage to the bolt 20, the movable body 21, the electric viscous fluid 41 and the case body 11 to raise the viscosity of the electric viscous fluid 41 in the sealing chamber 15, only when the vibration acceleration near the resonance point frequency between the turning frame 3 and the cab floor member 9 is not less than the predetermined value. The impulse-like vibration acceleration of the initial shock is generally a high frequency and filtered by the band-pass filter circuit 42b, and therefore voltage is not applied, the viscosity of the electric viscous fluid 41 remains low.

Moreover, an insulator 43 is provided between the bolt 20 and the cap floor member 9, and a ground 44 is connected to the case body 11. Other constitutions of the vibration control mount apparatus 10 shown in Fig. 7 are basically similar to the constitutions shown in Fig. 1.

Further, for example, when a shock such as a pushing-up load from a surface of bedrock is applied to the body 7 of the oil hydraulic power shovel 1 during digging work by use of the oil hydraulic power shovel 1 provided with the vibration control mount apparatus 10 shown in Fig. 7, the shock applied to the body 7 is absorbed by the vibration control mount apparatus 10, and the vibration of the cab 8 is controlled. That is, the voltage is not applied in the initial shock, the viscosity of the electric viscous fluid 41 remains low. Therefore, the orifice resistance during the fluid movement in the gap (orifice) 24 becomes smaller, the initial pushing-up load with the large amplitude is absorbed, as a result, a large force is not applied to the cab floor member 9, and there is no possibility of causing reduction in the durability of the cab 8. Furthermore, after the shock is applied to the body 7 of the oil hydraulic power shovel 1, when the vibration acceleration near the resonance point frequency between the turning frame 3 of the body 7 and the cab floor member 9 of the cab 8 is not less than the predetermined value, voltage is applied to the electric viscous fluid 41, etc., and the viscosity of the electric viscous fluid 41 in the sealing chamber 15 is raised. Therefore, the orifice resistance during the fluid movement in the gap (orifice) 24 becomes larger, the residual vibration with the small amplitude is promptly damped, as a result, there is no possibility of causing a reduction in the riding comfort of the operator.

The vibration control mount apparatus 10 shown in Fig. 7 thus maintains low viscosity of the electric viscous fluid 41 without changing it during the initial pushing-up load based on a shock to absorb the load, and thus includes the viscosity variable controlling means 42, which raises the viscosity of the electric viscous fluid 41 during the residual vibration after the shock, to promptly damp the residual vibration based on inertia generated after the shock, without a large change to the conventional viscous mount shape, similarly to the vibration control mount apparatus 10 shown in Fig. 1. Accordingly, it is possible to plan improvements in the durability of the cab 8 and the riding comfort of the operator, etc. Further, the vibration control mount apparatus 10 can change the orifice resistance in the gap (orifice) 24 by the electric viscous fluid 41 to enlarge the gap (orifice) 24 between the damper plate 23 and the case body 11. Therefore, the apparatus 10 can control abrasion caused by interference between the damper plate 23 and the case body 11, maintain the stable damping factor characteristic, and make the secular change of performance smaller.

Moreover, in either embodiment, the acceleration detecting means 31 may be an acceleration sensor which directly detects the vibration acceleration of the movable body 21.

Further, an elastic body supporting the movable body 21 is not limited to the mount rubber 14, and may be an object employing a spring, etc.

Furthermore, the vibration control mount apparatus 10 is applicable to a traveling machine such as a truck, in addition to the working machine such as the oil hydraulic power shovel 1.

### Industrial Applicability

The present invention is applicable to a working machine such as an oil hydraulic power shovel or a traveling machine such as a truck.

## Claims

1. A vibration control mount apparatus comprising:
a case body mounted on a mount base member;
an elastic body mounted on the case body;
a sealing chamber formed in the case body;
a viscosity change fluid which is sealed in the sealing chamber and of which viscosity is changed;
a movable body that has a damper plate which moves while receiving resistance from the viscosity change fluid in the sealing chamber and that is supported by the elastic body;
acceleration detecting means for detecting vibration acceleration of the movable body; and
viscosity variable controlling means for changing the viscosity of the viscosity change fluid in accordance with vibration acceleration detected by the acceleration detecting means.

2. The vibration control mount apparatus according to claim 1, wherein
the viscosity change fluid is a magnetic viscous fluid of which viscosity is changed by a magnetic field; and
the viscosity variable controlling means forms the magnetic field in accordance with vibration acceleration detected by the acceleration detecting means to change the viscosity of the magnetic viscous fluid.

3. The vibration control mount apparatus according to claim 1, wherein
the viscosity change fluid is an electric viscous fluid of which viscosity is changed by application of voltage; and
the viscosity variable controlling means applies voltage in accordance with vibration acceleration detected by the acceleration detecting means to change the viscosity of the electric viscous fluid.

4. The vibration control mount apparatus according to claim 1, wherein the viscosity variable controlling means raises viscosity of the viscosity change fluid during residual vibration generated by a shock.

5. The vibration control mount apparatus according to any one of claims 1 to 4, wherein
the mount base member is a turning frame of a working machine; and
a cab floor member is mounted on the movable body.
